# EUROPÄISCHE PATENTSCHRIFT

(11) **EP 3 642 463 B1**
(45) Veröffentlichungstag und Bekanntmachung des Hinweises auf die Patenterteilung: **13.04.2022**
(21) Anmeldenummer: 18726991.5
(22) Anmeldetag: 24.05.2018
(51) Int. Cl.: F02B 37/00, F02B 37/007, F02B 37/02, F02B 37/04, F02B 39/10, F02B 75/22, F02B 39/04, F02B 75/18

(54) **BRENNKRAFTMASCHINE**
INTERNAL COMBUSTION ENGINE
MOTEUR À COMBUSTION INTERNE

(30) Priorität: 23.06.2017 DE 102017210582
(43) Veröffentlichungstag der Anmeldung: 29.04.2020
(73) Patentinhaber: Bayerische Motoren Werke Aktiengesellschaft, 80809 München (DE)
(72) Erfinder: SCHWARZ, Christian, 81245 Muenchen (DE)
(86) Internationale Anmeldenummer: PCT/EP2018/063584
(87) Internationale Veröffentlichungsnummer: WO 2018/233974

(56) Entgegenhaltungen:
- DE-A1-102006 042 443
- DE-A1-102008 055 896
- DE-A1-102010 055 059
- US-A1- 2009 183 506
- US-A1- 2014 298 799

## Beschreibung

Die Erfindung betrifft eine Brennkraftmaschine in V-Bauart mit den Merkmalen aus dem Oberbegriff des Patentanspruchs 1.

Zum technischen Umfeld wird beispielsweise auf die Europäische Patentanmeldung EP 1 355 952 A1 hingewiesen. Aus dieser ist ein Ladesystem für eine Brennkraftmaschine bekannt, bei welcher vor oder hinter einem Abgasturbolader ein elektrisch betriebener Kompressor zur aktiven Erhöhung des Ladedrucks angeordnet ist. Eine Bypassleitung zur Umgehung des Kompressors kann von einer Bypassklappe wahlweise geöffnet oder geschlossen werden. Ein Regler sorgt dafür, dass bei abgeschaltetem Kompressor ein Teil der Ladeluft über diesen geleitet wird und somit eine Leerlaufdrehzahl des Kompressors aufrechterhält, welches dessen schnelleres Anlaufen ermöglicht.

Nachteilig an dieser bekannten Ausführung ist, dass die Abgaskrümmer beidseitig der Brennkraftmaschine angeordnet sind, was erheblichen Bauraumbedarf benötigt.

Weiter ist aus der Deutschen Offenlegungsschrift DE 10 2004 001 371 A1 eine Brennkraftmaschine mit einer Abgasrückführung bekannt. Die Brennkraftmaschine weist eine Ansaugleitung mit eingangsseitigem Ansaugverdichter auf und mit einer der Abgasrückführung angehörenden Rückführleitung, die mittels einer Einmündung mit der Ansaugleitung verbunden ist. Es ist ein in Reihe zum Ansaugverdichter und stromauf der Einmündung liegender Zusatzverdichter vorgesehen, dessen Funktion für einen Expanderbetrieb umkehrbar ist. Die aus dieser Offenlegungsschrift bekannte Brennkraftmaschine weist einen Abgaskrümmer im heißen V auf, der entsprechend Bauraum einspart.

Nachteilig an dieser bekannten Ausführung ist jedoch, dass die Ansaugleitungen für jede Zylinderbank von dem Zusatzverdichter mit Druckluft beaufschlagt werden müssen. Dies nimmt wieder erheblichen Bauraum weg.

Weiter ist aus dem Europäischen Patent EP 2 115 284 B1, von der die vorliegende Erfindung ausgeht, eine Brennkraftmaschine mit acht Zylindern in V-Bauart, mit einer Abgasanlage mit einem ersten und einem zweiten Abgasturbolader bekannt. Hierbei sind von einem ersten, einem zweiten, einem dritten und einem vierten, in Reihe nebeneinander angeordnete Zylindern eine erste Zylinderbank und von einem fünften, einem sechsten, einem siebten und einem achten in Reihe nebeneinander angeordneten Zylinder eine zweite, der ersten Zylinderbank gegenüberliegende Zylinderbank gebildet. Die Brennkraftmaschine weist von Zylinder zu Zylinder eine Zündfolge von 90° Kurbelwinkel auf. Die Abgasanlage weist einen ersten, einen zweiten, einen dritten und einen vierten Abgasstrang von den Zylindern zu den zwei Abgasturboladern auf, wobei einem Abgasstrang jeweils zwei Zylinder und zwei Abgassträngen jeweils ein Abgasturbolader zugeordnet ist, wobei
- zwei, einem Abgasstrang zugeordnete Zylinder einen Zündabstand von 360° Kurbelwinkel aufweisen und
- dass der erste und der zweite, einem Abgasturbolader zugeordnete Abgasstrang eine um 180° Kurbelwinkel zueinander verschobene Zündfolge aufweist.

Weitere ähnliche Brennkraftmaschinen in V-Bauart sind z.B. aus DE 10 2006 042 443 A1, DE 10 2010 055 059 A1 und US 2009/183506 A1 bekannt.

Auch wenn dieser Stand der Technik keinen direkten Nachteil aufweist, liegt der Erfindung die Aufgabe zugrunde, das Ansprechverhalten der Aufladegruppe (Response) nochmals deutlich zu verbessern, bei geringstem Packagebedarf und geringsten Kosten.

Diese Aufgabe wird durch die Merkmale im kennzeichnenden Teil des Patentanspruchs 1 gelöst.

Durch die erfindungsgemäße Ausgestaltung wird der Response der Aufladegruppe in vorteilhafter Weise wesentlich gesteigert, wobei nur ein einziger, weiterer Verdichter notwendig ist. Dies spart Kosten und erheblichen Packagebedarf.

Vorteilhafte Weiterbildungen der Erfindung sind in den Unteransprüchen beschrieben.

Durch die Ausgestaltung gemäß Patentanspruch 2 kann bei hohen Lasten und hohen Drehzahlen der Brennkraftmaschine der dritte Verdichter umgangen werden, um Druckverluste zu vermeiden.

Mit der Ausgestaltung gemäß Patentanspruch 3 kann der Luftmassenstrom durch den dritten Verdichter und den Bypass geregelt oder gesteuert werden.

Mit den Ausgestaltungen gemäß den Patentansprüchen 4 und 5 wird ein durch den Ladungswechsel bedingtes Rückströmen der Frischluft verhindert.

Bevorzugt ist der dritte Verdichter gemäß Patentanspruch 6 8- elektrisch und/oder mechanisch antreibbar. Besonders bevorzugt ist der dritte Verdichter ein mit einer Spannung von 48V betreibbarer elektrischer Verdichter.

Im Folgenden ist die Erfindung anhand eines Ausführungsbeispiels in zwei Figuren näher erläutert.
- Figur 1: zeigt schematisch eine erfindungsgemäße Brennkraftmaschine mit acht Zylindern in V-Bauart.
- Figur 2: zeigt einen zugehörigen Abgaskrümmer.

Im Folgenden gelten für gleiche Bauelemente in beiden Figuren die gleichen Bezugsziffern.

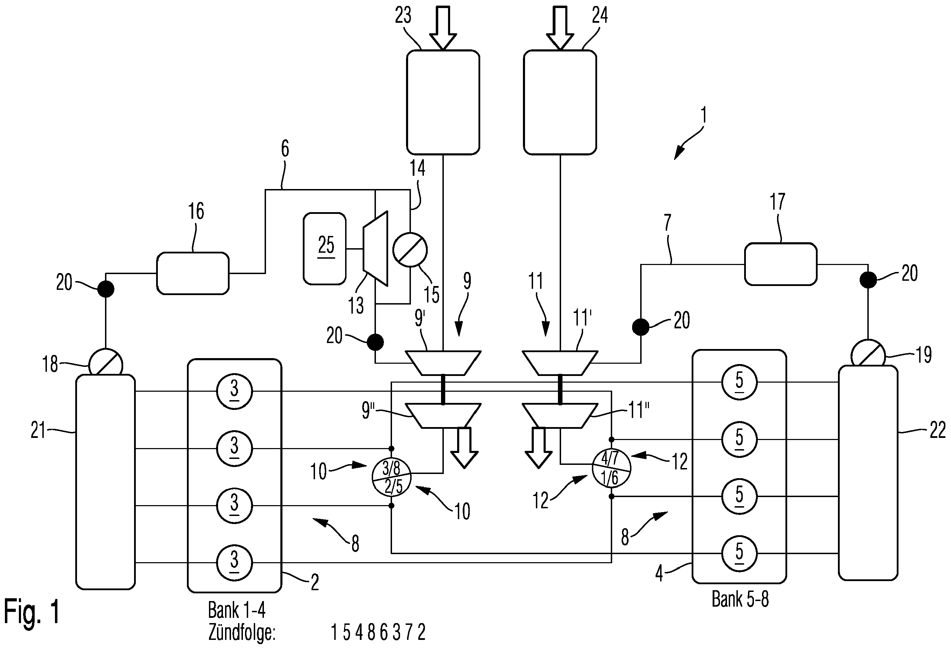

Figur 1 zeigt schematisch eine erfindungsgemäße Brennkraftmaschine 1 mit acht Zylindern in V-Bauart. Die Brennkraftmaschine 1 weist eine erste Zylinderbank 2 mit vier ersten Zylindern 3 und eine zweite Zylinderbank 4 mit vier zweiten Zylindern 5 auf. Die erste Zylinderbank 2 und die zweite Zylinderbank 4 liegen sich gemäß dem Stand der Technik gegenüber.

Weiter sind für die erste Zylinderbank 2 eine erste Frischgasleitung 6 und für die zweite Zylinderbank 4 eine zweite Frischgasleitung 7 vorgesehen. Die erste Frischgasleitung 6 wird über einen ersten Ansauggeräuschdämpfer 23 mit Frischluft über einen ersten Verdichter 9' eines ersten Abgasturboladers 9 versorgt. Eine Einströmrichtung der Frischluft ist mit einem Pfeil gekennzeichnet. Weiter wird die zweite Frischluftleitung 7 über einen zweiten Ansauggeräuschdämpfer 24 über einen zweiten Verdichter 11' eines zweiten Abgasturboladers 11 mit Frischgas versorgt. Eine Einströmrichtung der Frischluft ist wiederum mit einem Pfeil gekennzeichnet.

Die erste Frischgasleitung 6 mündet in einen ersten Luftsammler 21 von dem aus die Frischluft zu den ersten vier Zylindern 3 befördert wird. Die zweite Frischgasleitung 7 mündet in einen zweiten Luftsammler 22, von dem aus die vier zweiten Zylinder 5 mit Frischgas beliefert werden.

Weiter weist die Brennkraftmaschine 1 eine Abgasanlage 8 auf, mit dem ersten Abgasturbolader 9, mit dem ersten Verdichter 9' und einer ersten Turbine 9" mit zwei ersten Abgaseinlässen 10 und einem zweiten Abgasturbolader 11 mit dem zweiten Verdichter 11' und einer zweiten Turbine 11" mit zwei weiteren zweiten Abgaseinlässen 12.

Die erste Frischgasleitung 6 ist in Strömungsrichtung des Frischgases nach dem ersten Verdichter 9' Frischgas führend mit den ersten vier Zylindern 3 verbindbar, wobei die Frischgasverbindung über Gaswechselventile realisiert ist. Die zweite Frischgasleitung 7 ist in Strömungsrichtung des Frischgases nach dem zweiten Verdichter 11' ebenfalls Frischgas führend mit den zweiten vier Zylindern 5 verbindbar, was ebenfalls über Gaswechselventile erfolgt.

Weiter sind ein erster Zylinder 3 und ein zweiter Zylinder 5 über die Abgasanlage 8 Abgas führend mit dem ersten ersten Abgaseinlass 10 und ein erster Zylinder 3 und ein zweiter Zylinder 5 über die Abgasanlage 8 Abgas führend mit dem zweiten ersten Abgaseinlass 10 und ein erster Zylinder 3 und ein zweiter Zylinder 5 über die Abgasanlage 8 Abgas führend mit dem ersten zweiten Abgaseinlass 12 und ein erster Zylinder 3 und ein zweiter Zylinder 5 über die Abgasanlage 8 Abgas führend mit dem zweiten zweiten Abgaseinlass 12 verbindbar. Bei dem hier beschriebenen Abgaskrümmer handelt es sich um einen sogenannten bankübergreifenden Krümmer. Dies bedeutet, dass jeder Abgasturbolader mit Abgas von jeder Zylinderbank beaufschlagt werden kann. Ein aus den Turbinen 9, 11 ausströmendes Abgas ist durch zwei Pfeile dargestellt.

Erfindungsgemäß ist zwischen dem ersten Verdichter 9' und den ersten vier Zylindern 3 und der ersten Frischgasleitung 6 ein einziger dritter Verdichter 13 für die erste Zylinderbank 2 vorgesehen.

Durch die erfindungsgemäße Ausgestaltung ist es möglich, auf einen zweiten dritten Verdichter zu verzichten, da über den bankübergreifenden Krümmer beide Turbinen 9", 11" des ersten und des zweiten Abgasturboladers 9, 11 mit Abgas ausschließlich von der ersten Zylinderbank 2 beaufschlagt werden. Durch diese Maßnahme ist der Response der Brennkraftmaschine 1 deutlich verbessert, wobei gleichzeitig Kosten für einen zweiten dritten Verdichter eingespart werden bei gleichzeitig erheblichen Packagevorteilen.

Besonders bevorzugt weist der dritte Verdichter 13 einen Bypass 14 auf, in dem ein Drosselelement 15, wie z. B. eine Drosselklappe, angeordnet ist. Durch diese Ausgestaltung kann der dritte Verdichter 13 umgangen werden, so dass dieser bei hohen Drehzahlen und hohen Lasten der Brennkraftmaschine keinen zusätzlichen Strömungswiderstand darstellt.

Weiter ist in der ersten Frischgasleitung 6 zwischen dem dritten Verdichter 13 und den ersten vier Zylindern 3 ein erster Ladeluftkühler 16 angeordnet und in der zweiten Frischgasleitung 7 zwischen dem zweiten Verdichter 11' und den vier zweiten Zylindern 5 ein zweiter Ladeluftkühler 17 angeordnet. Durch diese Maßnahme wird die komprimierte, heiße Frischluft herabgekühlt, was zu einem wesentlich höheren Füllgrad für die Zylinder 3, 5 führt, für mehr Leistung und Drehmoment.

Weiter ist in dem vorliegenden Ausführungsbeispiel in der ersten Frischgasleitung 6 zwischen dem ersten Ladeluftkühler 16 und den vier ersten Zylindern 3 ein erstes Rückschlagventil 18 und in der zweiten Frischgasleitung 7 zwischen dem zweiten Ladeluftkühler 17 und den vier zweiten Zylindern 5 ein zweites Rückschlagventil 19 angeordnet. Hierdurch ist verhindert, dass durch den Ladungswechsel bedingt Frischgas zurück in die erste Frischgasleitung 6 und die zweite Frischgasleitung 7 strömt.

In dem vorliegenden Ausführungsbeispiel ist der dritte Verdichter 13 mit einem elektrischen Motor 25 elektrisch angetrieben, der bevorzugt mit einer Spannung von 48 V betrieben wird, aber auch eine Spannung von beispielsweise 12 V ist möglich. In einem weiteren Ausführungsbeispiel kann der Antrieb des dritten Verdichters 13 auch mechanisch oder elektromechanisch realisiert sein.

Zwischen dem ersten Ladeluftkühler 16 und dem ersten Rückschlagventil 18 ist in der ersten Frischgasleitung 6 ein Temperatur- und/oder Drucksensor 20 angeordnet. Zwischen dem ersten Verdichter 9' und dem dritten Verdichter 13, bzw. zwischen dem zweiten Verdichter 11' und dem zweiten Ladeluftkühler 17, sowie zwischen dem zweiten Ladeluftkühler 17 und dem zweiten Rückschlagventil 19 ist jeweils ein weiterer Temperatur- und/oder Drucksensor 20 in den Frischgasleitungen 6, 7 angeordnet.

Die erste Zylinderbank 2 weist die Zylinder 1 bis 4 und die zweite Zylinderbank 4 weist die Zylinder 5 bis 8 auf, gemäß der allgemeinen Bezifferung von Zylindern für V8 Brennkraftmaschinen. In dem vorliegenden Ausführungsbeispiel liegt eine Zündfolge vor von Zylinder zu Zylinder: 1, 5, 4, 8, 6, 3, 7, 2.

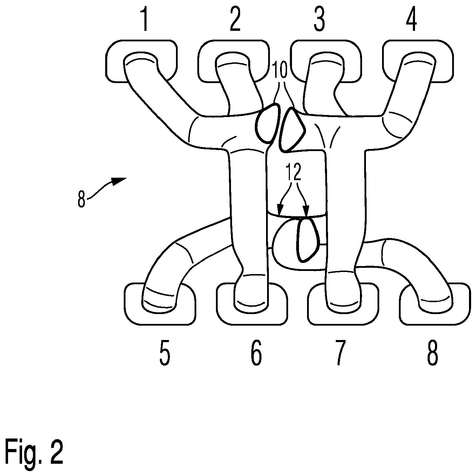

Für eine erfindungsgemäße Brennkraftmaschine 1 in V-Bauart mit acht Zylindern und der genannten Zündfolge zeigt Figur 2 einen bankübergreifenden Krümmer der Abgasanlage 8. Die zum Krümmer korrespondierenden Zylinder sind mit 1 bis 8 beziffert, gut erkennbar sind die zwei ersten Abgaseinlässe 10 sowie die zwei zweiten Abgaseinlässe 12 für jeweils einen Abgasturbolader 9, 11.

Aufgrund der erfindungsgemäßen Ausgestaltung ist die Aufladung der erfindungsgemäßen Brennkraftmaschine 1 mit einem einzigen E-Verdichter, dem dritten Verdichter 13, bei einer V8 Brennkraftmaschine mit bankübergreifenden Krümmer möglich, da beide Zylinderbänke 2, 4 gleichzeitig "hochgezogen" werden.

### BEZUGSZEICHENLISTE

- 1.: Brennkraftmaschine
- 2.: erste Zylinderbank
- 3.: erster Zylinder
- 4.: zweite Zylinderbank
- 5.: zweiter Zylinder
- 6.: erste Frischgasleitung
- 7.: zweite Frischgasleitung
- 8.: Abgasanlage
- 9.: erster Abgasturbolader
- 9': erster Verdichter
- 9": erste Turbine
- 10.: erster Abgaseinlass
- 11.: zweiter Abgasturbolader
- 11': zweiter Verdichter
- 11": zweite Turbine
- 12.: zweiter Abgaseinlass
- 13.: dritter Verdichter
- 14.: Bypass
- 15.: Drosselelement
- 16.: erster Ladeluftkühler
- 17.: zweiter Ladeluftkühler
- 18.: erstes Rückschlagventil
- 19.: zweites Rückschlagventil
- 20.: Temperatur- und/oder Drucksensor
- 21.: erster Luftsammler
- 22.: zweiter Luftsammler
- 23.: erster Ansauggeräuschdämpfer
- 24.: zweiter Ansauggeräuschdämpfer
- 25.: elektrischer Motor

## Patentansprüche

1. Brennkraftmaschine (1) in V-Bauart, mit einer ersten Zylinderbank (2) mit vier ersten Zylindern (3) und einer zweiten Zylinderbank (4) mit vier zweiten Zylindern (5) und mit einer in einen ersten Luftsammler (21) mündenden ersten Frischgasleitung (6) für die erste Zylinderbank (2) und mit einer in einen zweiten Luftsammler (22) mündenden zweiten Frischgasleitung (7) für die zweite Zylinderbank (4) und mit einer Abgasanlage (8) mit einem ersten Abgasturbolader (9) mit einem ersten Verdichter (9') und einer ersten Turbine (9") mit zwei ersten Abgaseinlässen (10) und einem zweiten Abgasturbolader (11) mit einem zweiten Verdichter (11') und einer zweiten Turbine (11") mit zwei zweiten Abgaseinlässen (12), wobei die erste Frischgasleitung (6) in Strömungsrichtung eines Frischgases nach dem ersten Verdichter (9') Frischgas führend mit den ersten vier Zylindern (3) verbindbar ist und die zweite Frischgasleitung (7) in Strömungsrichtung des Frischgases nach dem zweiten Verdichter (11') Frischgas führend mit den zweiten vier Zylindern (5) verbindbar ist, wobei ein erster Zylinder (3) und ein zweiter Zylinder (5) über die Abgasanlage (8) Abgas führend mit dem ersten ersten Abgaseinlass (10) und ein erster Zylinder (3) und ein zweiter Zylinder (5) über die Abgasanlage (8) Abgas führend mit dem zweiten ersten Abgaseinlass (10) und ein erster Zylinder (3) und ein zweiter Zylinder (5) über die Abgasanlage (8) Abgas führend mit dem ersten zweiten Abgaseinlass (12) und ein erster Zylinder (3) und ein zweiter Zylinder (5) über die Abgasanlage (8) Abgas führend mit dem zweiten zweiten Abgaseinlass (12) verbindbar ist, wobei in der ersten Frischgasleitung (6) ein erster Ladeluftkühler (16) angeordnet ist und in der zweiten Frischgasleitung zwischen dem zweiten Verdichter (11') und den vier zweiten Zylindern (5) ein zweiter Ladeluftkühler (17) angeordnet ist,
**dadurch gekennzeichnet dass**
nur ein einziger, weiterer Verdichter, nämlich ein einziger dritter Verdichter (13) vorgesehen ist, wobei dieser einzige dritte Verdichter (13) zwischen dem ersten Verdichter (9') und den ersten vier Zylindern (3) in der ersten Frischgasleitung (6) angeordnet ist, und wobei der erste Ladeluftkühler (16) zwischen dem dritten Verdichter (13) und den ersten vier Zylindern (3) angeordnet ist.

2. Brennkraftmaschine nach Patentanspruch 1,
**dadurch gekennzeichnet, dass** der dritte Verdichter (13) einen Bypass (14) aufweist.

3. Brennkraftmaschine nach Patentanspruch 2,
**dadurch gekennzeichnet, dass** in dem Bypass (14) ein Drosselelement (15) angeordnet ist.

4. Brennkraftmaschine nach einem der vorhergehenden Patentansprüche, **dadurch gekennzeichnet, dass** in der ersten Frischgasleitung (6) zwischen dem ersten Ladeluftkühler (16) und den vier ersten Zylindern (3) ein erstes Rückschlagventil (18) angeordnet ist.

5. Brennkraftmaschine nach einem der vorhergehenden Patentansprüche, **dadurch gekennzeichnet, dass** in der zweiten Frischgasleitung (7) zwischen dem zweiten Ladeluftkühler (17) und den vier zweiten Zylindern (5) ein zweites Rückschlagventil (19) angeordnet ist.

6. Brennkraftmaschine nach einem der vorhergehenden Patentansprüche, **dadurch gekennzeichnet, dass** der dritte Verdichter (13) elektrisch und/oder mechanisch antreibbar ist.

## Claims

1. Internal combustion engine (1) of V-type construction, having a first cylinder bank (2) with four first cylinders (3) and a second cylinder bank (4) with four second cylinders (5) and having a first fresh-gas line (6), which opens into a first air manifold (21), for the first cylinder bank (2) and having a second fresh-gas line (7), which opens into a second air manifold (22), for the second cylinder bank (4) and having an exhaust system (8) with a first exhaust-gas turbocharger (9) with a first compressor (9') and a first turbine (9'') with two first exhaust-gas inlets (10) and a second exhaust-gas turbocharger (11) with a second compressor (11') and a second turbine (11") with two second exhaust-gas inlets (12), wherein the first fresh-gas line (6) is, downstream of the first compressor (9') in a flow direction of a fresh gas, connectable in fresh-gas-conducting fashion to the first four cylinders (3), and the second fresh-gas line (7) is, downstream of the second compressor (11') in the flow direction of the fresh gas, connectable in fresh-gas-conducting fashion to the second four cylinders (5), wherein a first cylinder (3) and a second cylinder (5) are connectable in exhaust-gas-conducting fashion via the exhaust system (8) to the first first exhaust-gas inlet (10) and a first cylinder (3) and a second cylinder (5) are connectable in exhaust-gas-conducting fashion via the exhaust system (8) to the second first exhaust-gas inlet (10) and a first cylinder (3) and a second cylinder (5) are connectable in exhaust-gas-conducting fashion via the exhaust system (8) to the first second exhaust-gas inlet (12) and a first cylinder (3) and a second cylinder (5) are connectable in exhaust-gas-conducting fashion via the exhaust system (8) to the second second exhaust-gas inlet (12), wherein a first charge-air cooler (16) is arranged in the first fresh-gas line (6) and a second charge-air cooler (17) is arranged in the second fresh-gas line between the second compressor (11') and the four second cylinders (5), **characterized in that**
only a single further compressor, specifically a single third compressor (13), is provided, wherein said single third compressor (13) is arranged, between the first compressor (9') and the first four cylinders (3), in the first fresh-gas line (6), and wherein the first charge-air cooler (16) is arranged between the third compressor (13) and the first four cylinders (3).

2. Internal combustion engine according to Patent Claim 1,
**characterized in that** the third compressor (13) has a bypass (14).

3. Internal combustion engine according to Patent Claim 2,
**characterized in that** a throttle element (15) is arranged in the bypass (14).

4. Internal combustion engine according to any of the preceding patent claims,
**characterized in that** a first check valve (18) is arranged in the first fresh-gas line (6) between the first charge-air cooler (16) and the four first cylinders (3).

5. Internal combustion engine according to any of the preceding patent claims,
**characterized in that** a second check valve (19) is arranged in the second fresh-gas line (7) between the second charge-air cooler (17) and the four second cylinders (5).

6. Internal combustion engine according to any of the preceding patent claims,
**characterized in that** the third compressor (13) can be driven electrically and/or mechanically.

## Revendications

1. Moteur à combustion interne (1) de type en V, comprenant un premier banc de cylindres (2) comprenant quatre premiers cylindres (3) et un deuxième banc de cylindres (4) comprenant quatre deuxièmes cylindres (5) et comprenant une première conduite de gaz frais (6) débouchant dans un premier collecteur d'air (21) pour le premier banc de cylindres (2) et comprenant une deuxième conduite de gaz frais (7) débouchant dans un deuxième collecteur d'air (22) pour le deuxième banc de cylindres (4), et comprenant un système d'échappement (8) comprenant un premier turbocompresseur de gaz d'échappement (9) comprenant un premier compresseur (9') et une première turbine (9") comprenant deux premières entrées de gaz d'échappement (10) et un deuxième turbocompresseur de gaz d'échappement (11) comprenant un deuxième compresseur (11') et une deuxième turbine (11") comprenant deux deuxièmes entrées de gaz d'échappement (12), la première conduite de gaz frais (6) pouvant être reliée aux quatre premiers cylindres (3) de manière à conduire du gaz frais après le premier compresseur (9') dans la direction d'écoulement d'un gaz frais, et la deuxième conduite de gaz frais (7) pouvant être reliée aux quatre deuxièmes cylindres (5) de manière à conduire du gaz frais après le deuxième compresseur (11') dans la direction d'écoulement du gaz frais, un premier cylindre (3) et un deuxième cylindre (5) pouvant être reliés à la première première entrée de gaz d'échappement (10) par l'intermédiaire du système d'échappement (8) de manière à conduire du gaz d'échappement, et un premier cylindre (3) et un deuxième cylindre (5) pouvant être reliés à la deuxième première entrée de gaz d'échappement (10) par l'intermédiaire du système d'échappement (8) de manière à conduire du gaz d'échappement, et un premier cylindre (3) et un deuxième cylindre (5) pouvant être reliés à la première deuxième entrée de gaz d'échappement (12) par l'intermédiaire du système d'échappement (8) de manière à conduire du gaz d'échappement, et un premier cylindre (3) et un deuxième cylindre (5) pouvant être reliés à la deuxième deuxième entrée de gaz d'échappement (12) par l'intermédiaire du système d'échappement (8) de manière à conduire du gaz d'échappement, un premier refroidisseur d'air de suralimentation (16) étant agencé dans la première conduite de gaz frais (6) et un deuxième refroidisseur d'air de suralimentation (17) étant agencé dans la deuxième conduite de gaz frais entre le deuxième compresseur (11') et les quatre deuxièmes cylindres (5),
**caractérisé en ce que**
seul un autre compresseur unique, à savoir un troisième compresseur unique (13) est prévu, ce troisième compresseur unique (13) étant agencé entre le premier compresseur (9') et les quatre premiers cylindres (3) dans la première conduite de gaz frais (6), et le premier refroidisseur d'air de suralimentation (16) étant agencé entre le troisième compresseur (13) et les quatre premiers cylindres (3).

2. Moteur à combustion interne selon la revendication 1, **caractérisé en ce que** le troisième compresseur (13) présente une dérivation (14).

3. Moteur à combustion interne selon la revendication 2, **caractérisé en ce qu'**un élément d'étranglement (15) est agencé dans la dérivation (14).

4. Moteur à combustion interne selon l'une quelconque des revendications précédentes, **caractérisé en ce qu'**un premier clapet anti-retour (18) est agencé dans la première conduite de gaz frais (6) entre le premier refroidisseur d'air de suralimentation (16) et les quatre premiers cylindres (3).

5. Moteur à combustion interne selon l'une quelconque des revendications précédentes, **caractérisé en ce qu'**un deuxième clapet anti-retour (19) est agencé dans la deuxième conduite de gaz frais (7) entre le deuxième refroidisseur d'air de suralimentation (17) et les quatre deuxièmes cylindres (5).

6. Moteur à combustion interne selon l'une quelconque des revendications précédentes, **caractérisé en ce que** le troisième compresseur (13) peut être entraîné électriquement et/ou mécaniquement.
